# EUROPÄISCHE PATENTANMELDUNG

(11) **EP 4 650 604 A1**
(43) Veröffentlichungstag der Anmeldung: **19.11.2025**
(21) Anmeldenummer: 25176295.1
(22) Anmeldetag: 14.05.2025
(51) Int. Cl.: F04D 13/06, B01F 33/453, F04D 29/22, F04D 29/62

(54) **VERFAHREN ZUR HERSTELLUNG EINES FLÜGELRADS**

(30) Priorität: 14.05.2024 EP 24175815
(71) Anmelder: Levitronix GmbH, 8048 Zürich (CH)
(72) Erfinder: Nussbaumer, Thomas Dr., 8049 Zürich (CH); Schneeberger, Thomas Dr., 3006 Bern (CH)
(74) Vertreter: IPS Irsch AG

(57) **Zusammenfassung**

Es wird ein Verfahren vorgeschlagen zur Herstellung eines Flügelrads für eine Misch- oder Pumpvorrichtung mit magnetisch gelagertem Flügelrad mit den folgenden Schritten:
Bereitstellen eines magnetisch lagerbaren Laufrads (10), welches einen permanentmagnetischen Kern (4) aufweist, der von einer Ummantelung (30) vollständig umschlossen wird, wobei die Ummantelung (30) aus einem Kunststoff besteht, und wobei auf der Ummantelung (30) eine Mehrzahl von Schaufeln (20) zum Mischen oder Fördern von Substanzen vorgesehen ist;
Entfernen aller Schaufeln (20) von der Ummantelung (30);
Trennen des permanentmagnetischen Kerns (4) von der Ummantelung (30);
Anbringen einer Umkapselung (3), welche aus einem Kunststoff besteht, und welche den permanentmagnetischen Kern (4) vollständig umschliesst;
Anbringen einer Mehrzahl von Flügeln (2) auf der Umkapselung (3).

## Beschreibung

Die Erfindung betrifft ein Verfahren zur Herstellung eines Flügelrads für eine Misch- oder Pumpvorrichtung mit magnetisch gelagertem Flügelrad.

In der biotechnologischen und in der pharmazeutischen Industrie werden häufig elektromagnetische Drehantriebe eingesetzt, die als Pumpvorrichtungen oder als Mischvorrichtungen ausgestaltet sind, und bei denen der Rotor, welcher das Flügelrad bildet, magnetisch gelagert ist. Die Pumpvorrichtungen, z. B. Zentrifugalpumpen, dienen beispielsweise dazu, Fluide durch einen Kreislauf mit einem Bioreaktor zu fördern. Die Mischvorrichtungen werden beispielsweise zur Vorbereitung von Pufferlösungen oder Zellkulturmedien oder auch zur kontinuierlichen Durchmischung und Zirkulation der Nährflüssigkeit in einem Bioreaktor verwendet.

In der Pharmaindustrie müssen bei der Herstellung von pharmazeutisch wirksamen Substanzen höchste Ansprüche an die Reinheit gestellt werden, meist müssen die mit den Substanzen in Kontakt kommenden Komponenten sogar steril sein. Ähnliche Anforderungen ergeben sich auch in der Biotechnologie, beispielsweise bei der Herstellung, Behandlung oder Züchtung von biologischen Substanzen, Zellen oder Mikroorganismen, wo ein extrem hohes Mass an Reinheit gewährleistet sein muss, um die Brauchbarkeit des hergestellten Produkts nicht zu gefährden.

Um die Reinheitserfordernisse für den Prozess möglichst gut erfüllen zu können, ist man bemüht, die Anzahl der mit den jeweiligen Substanzen in Kontakt kommenden Komponenten einer Pump- oder Mischvorrichtung möglichst klein zu halten. Hierzu sind elektromagnetisch betriebene Pump- oder Mischvorrichtungen bekannt, bei denen der Rotor, der üblicherweise das Flügelrad bildet, in dem Mischbehälter angeordnet ist. Ausserhalb des Mischbehälters ist dann ein Stator vorgesehen, welcher mittels magnetischer bzw. elektromagnetischer Felder den Rotor durch die Wand des Mischbehälters berührungslos antreibt und berührungslos magnetisch in einer Sollposition lagert. Dieses "berührungslose" Konzept hat insbesondere auch den Vorteil, dass keine mechanischen Lager oder Durchführungen in den Mischbehälter benötigt werden, die eine Ursache von Verunreinigungen bzw. Kontaminationen bilden können.

Eine besonders effiziente derartige Vorrichtung, mit welcher Substanzen in einem Bioreaktor zirkuliert bzw. durchmischt werden, wird z.B. in der EP 3 115 103 A1 offenbart. Hier bilden der Stator und der in dem Mischbehälter angeordnete Rotor, welcher das Flügelrad bildet, einen lagerlosen Motor. Mit dem Begriff lagerloser Motor ist dabei ein elektromagnetischer Drehantrieb gemeint, bei welchem der Rotor vollkommen magnetisch bezüglich des Stators gelagert ist, wobei keine separaten magnetischen Lager vorgesehen sind. Der Stator ist dazu als Lager- und Antriebsstator ausgestaltet, der sowohl Stator des elektrischen Antriebs als auch Stator der magnetischen Lagerung ist. Mit den elektrischen Wicklungen des Stators lässt sich ein magnetisches Drehfeld erzeugen, welches zum einen ein Drehmoment auf den Rotor ausübt, das dessen Rotation bewirkt, und welches zum anderen eine beliebig einstellbare Querkraft auf den Rotor ausübt, sodass dessen radiale Position aktiv steuerbar bzw. regelbar ist.

Der Rotor dieser Mischvorrichtung stellt einen Integralrotor dar, weil er sowohl der Rotor des elektromagnetischen Antriebs ist als auch das Flügelrad der Mischvorrichtung. Neben der berührungslosen magnetischen Lagerung bietet der lagerlose Motor ferner den Vorteil einer sehr kompakten und platzsparenden Ausgestaltung.

Obwohl sich mit solchen berührungslos magnetisch gelagerten Mischern die Anzahl der mit den Substanzen in Kontakt kommenden Komponenten stark reduzieren lässt, ist die Reinigung bzw. das Sterilisieren dieser Komponenten immer noch mit einem sehr grossen Zeit- Material- und Kostenaufwand verbunden. Daher geht man häufig dazu über - wie dies auch in der bereits zitierten EP 3 115 103 A1 offenbart wird - die mit den Substanzen in Kontakt kommenden Komponenten als Einmal (singleuse) -teile für den Einmalgebrauch auszugestalten. Eine solche Mischvorrichtung setzt sich dann aus einer Einmalvorrichtung und einer wiederverwendbaren Vorrichtung zusammen. Dabei umfasst die Einmalvorrichtung diejenigen Komponenten, welche für den Einmalgebrauch bestimmt sind, also beispielsweise den Mischbehälter mit dem Rotor, und die wiederverwendbare Vorrichtung umfasst diejenigen Komponenten, die dauerhaft also mehrfach verwendet werden, beispielsweise den Stator.

Der Begriff Einmalteile (single use) bezeichnet dabei Teile bzw. Komponenten, die bestimmungsgemäss nur einmal benutzt werden dürfen. Nach der Anwendung werden die Einmalteile entsorgt und für die nächste Anwendung durch neue, das heisst noch nicht gebrauchte Einmalteile ersetzt.

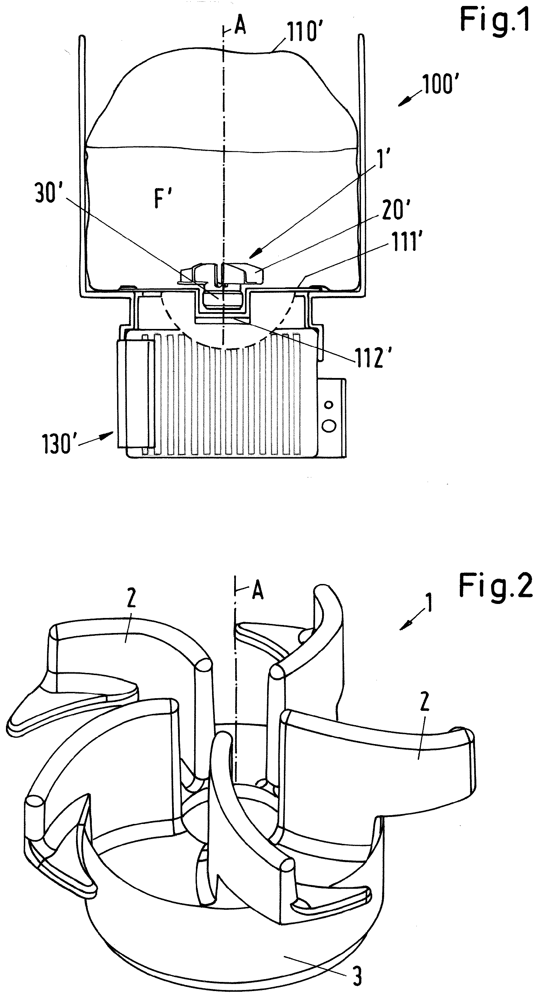

Fig. 1 zeigt in einer schematischen Darstellung einen Mischer oder einen Bioreaktor 100' wie er aus dem Stand der Technik bekannt ist.

Um anzuzeigen, dass es sich bei der Darstellung in Fig. 1 um eine Vorrichtung aus dem Stand der Technik handelt, sind hier die Bezugszeichen jeweils mit einem Hochkomma bzw. mit einem Strich versehen. Der Bioreaktor 100' umfasst einen Mischbehälter 110', der als Einmalteil ausgestaltet ist. Bei der Ausgestaltung als Einmalteil ist der Mischbehälter 110' häufig als flexibler Kunststoffbeutel ausgestaltet, der in einem formstabilen und wiederverwendbaren Stützbehälter 120' angeordnet ist. Der Stützbehälter 120' ist beispielsweise aus Edelstahl oder als formstabiles Kunststoffteil ausgestaltet.

Der als Kunststoffbeutel ausgestalteten Mischbehälter 110' ist mit einem Fluid F', beispielsweise mit einem Medium, einer Pufferlösung oder einer Zellbrühe, befüllt. Der Mischbehälter 110' umfasst eine formstabile Grundplatte 111' mit einem zylindrischen Becher 112' für die Aufnahme eines Flügelrads 1'. Das Flügelrad 1' bildet den Rotor einer Mischvorrichtung und umfasst einen permanentmagnetischen Kern (in Fig. 1 nicht zu erkennen), der von einer Ummantelung 30' vollständig umschlossen wird, wobei die Ummantelung 30' aus einem Kunststoff besteht. Auf der Ummantelung 30' ist eine Mehrzahl von Schaufeln 20' zum Mischen des Fluids F' vorgesehen. Im Betriebszustand ist der permanentmagnetische Kern des Flügelrads 1' in dem zylindrischen Becher 112' angeordnet.

Die Mischvorrichtung umfasst ferner einen Stator 130', der zusammen mit dem Flügelrad 1' einen elektromagnetischen Drehantrieb bildet, welcher nach dem Prinzip des lagerlosen Motors ausgestaltet ist. Der Stator 130' ist also als Lager- und Antriebsstator ausgestaltet, mit welchem das Flügelrad 1' im Betriebszustand berührungslos magnetisch zur Rotation um eine Solldrehachse antreibbar und bezüglich des Stators 130' berührungslos magnetisch lagerbar ist. Die Solldrehachse definiert eine axiale Richtung A.

In Fig. 1 ist der Stator 130' mit einem Ausbruch dargestellt, damit die Anordnung des Flügelrads 1' im Stator 130' besser erkennbar ist. Der Stator 130', der ausserhalb des Mischbehälters 110' angeordnet ist, umfasst eine becherförmige Ausnehmung, in welche der zylindrische Becher 112' des Mischbehälters 110' einsetzbar ist, sodass das Flügelrad 1' im Stator 130' berührungslos magnetisch lagerbar ist.

Der als flexibler Kunststoffbeutel ausgestalteten Mischbehälter 110' mit dem darin angeordneten Flügelrad 1' sind als Einmalvorrichtung für den Einmalgebrauch ausgestaltet, während der Stator 130' und der Stützbehälter 120' als wiederverwendbare Vorrichtung für den Mehrfachgebrauch ausgestaltet sind. Nach einer Anwendung wird also der Mischbehälter 110' mit dem darin befindlichen Flügelrad 1' aus der wiederverwendbaren Vorrichtung entfernt und entsorgt. Für die nächste Anwendung wird dann ein neuer, das heisst noch nicht benutzter Mischbehälter 110' mit einem neuen, das heisst noch nicht benutzten Flügelrad 1', welches in den Mischbehälter 110' angeordnet ist, in den Stator 130' und den Stützbehälter 120' eingesetzt.

Die Ausgestaltung des Mischbehälters 110' und des Flügelrads 1' als Einmalteile hat sich insbesondere in der pharmazeutischen und in der biotechnologischen Industrie als sehr vorteilhaft erwiesen, denn sie ermöglicht eine sehr hohe Flexibilität in den verschiedenen Prozessen. Zudem können zeit- und kostenintensive Sterilisierungsprozesse zumindest erheblich reduziert werden. Ferner lässt sich die Gefahr von Kreuzkontaminationen deutlich verringern.

Ein wesentlicher Aspekt ist es, dass die Einmalteile möglichst wirtschaftlich und kostengünstig gefertigt werden können. Hierbei wird insbesondere auch Wert auf preisgünstige, einfache Ausgangsmaterialien, wie beispielsweise handelsübliche Kunststoffe, gelegt. Auch Nachhaltigkeit, ein umweltbewusster Umgang sowie eine verantwortungsvolle Nutzung der zur Verfügung stehenden Ressourcen sind wesentliche Aspekte bei der Konzeption von Einwegteilen, Diesen Aspekten widmet sich die Erfindung.

Es ist daher eine Aufgabe der Erfindung, ein Verfahren zur Herstellung eines Flügelrads für eine Misch- oder Pumpvorrichtung mit magnetisch gelagertem Flügelrad vorzuschlagen, die eine besonders kostengünstige, umweltschonende und nachhaltige Herstellung eines Flügelrads ermöglicht. Dabei soll das Flügelrad insbesondere auch als Einmalteil für den Einmalgebrauch ausgestaltet werden können.

Der diese Aufgabe lösende Gegenstand der Erfindung ist durch die Merkmale des unabhängigen Patentanspruchs gekennzeichnet.

Erfindungsgemäss wird also ein Verfahren vorgeschlagen zur Herstellung eines Flügelrads für eine Misch- oder Pumpvorrichtung mit magnetisch gelagertem Flügelrad mit den folgenden Schritten:
- Bereitstellen eines magnetisch lagerbaren Laufrads, welches einen permanentmagnetischen Kern aufweist, der von einer Ummantelung vollständig umschlossen wird, wobei die Ummantelung aus einem Kunststoff besteht, und wobei auf der Ummantelung eine Mehrzahl von Schaufeln zum Mischen oder Fördern von Substanzen vorgesehen ist;
- Entfernen aller Schaufeln von der Ummantelung;
- Trennen des permanentmagnetischen Kerns von der Ummantelung;
- Anbringen einer Umkapselung, welche aus einem Kunststoff besteht, und welche den permanentmagnetischen Kern vollständig umschliesst;
- Anbringen einer Mehrzahl von Flügeln auf der Umkapselung.

Erfindungsgemäss wird also vorgeschlagen, aus einem existierenden Laufrad, beispielsweise einem als Einmalteil ausgestalteten und bereits benutzten Laufrad, den permanentmagnetischen Kern herauszutrennen und diesen für die Herstellung eines neuen Flügelrads zu verwenden. So kann insbesondere auch bei benutzten Einmalteilen der permanentmagnetische Kern wiederverwendet werden. Da der permanentmagnetische Kern in dem benutzten Laufrad durch die Ummantelung vor einem Kontakt mit Substanzen geschützt war, besteht auch keine Gefahr, dass durch die Wiederverwendung eine Kreuzkontamination verursacht werden könnte.

Da der permanentmagnetische Kern üblicherweise die kostspieligste Komponente des Flügelrads ist, führt die Wiederverwendung des permanentmagnetischen Kerns zu einer deutlichen Kostenreduktion bei der Herstellung des Flügelrads.

Es ist gemäss dem heutigen Stand der Technik üblich, für den permanentmagnetischen Kern des Flügelrads einen oder mehrere Permanentmagnete zu verwenden. Als Permanentmagnete werden insbesondere Metalle der Seltenen Erden bzw. Verbindungen oder Legierungen dieser Metalle verwendet, weil sich mit diesen aufgrund ihrer magnetischen Eigenschaften sehr starke permanentmagnetische Felder erzeugen lassen. Bekannte und häufig verwendete Beispiele dieser Seltenen Erden sind Neodym und Samarium. Solche Metalle stellen jedoch aufgrund ihrer aufwändigen Gewinnung und Verarbeitung einen erheblichen Kostenfaktor dar. Zudem ist die Entsorgung solcher Permanentmagnete, beispielsweise nach dem Einmalgebrauch auch unter umwelttechnischen Aspekten häufig mit Problemen oder hohem Aufwand verbunden, wodurch zusätzliche Kosten entstehen. Es ist daher unter wirtschaftlichen, Kosten- und Umweltaspekten insbesondere auch bei Einmalanwendungen vorteilhaft, dass der permanentmagnetische Kern eines Laufrads nach der Benutzung des Laufrads für die Herstellung eines neuen Flügelrads verwendet wird. Insbesondere lässt sich die CO₂ Bilanz des Flügelrads durch das erfindungsgemässe Verfahren stark verbessern. Auch unter dem Aspekt der Nachhaltigkeit ist die Wiederverwendung des permanentmagnetischen Kerns für die Herstellung eines neuen Flügelrads besonders vorteilhaft.

Gemäss einer bevorzugten Ausgestaltung wird vor dem Trennen des permanentmagnetischen Kerns von der Ummantelung der permanentmagnetische Kern entmagnetisiert wird. Hierdurch lässt es sich insbesondere vermeiden, dass der permanentmagnetische Kern Verunreinigungen anzieht. Da der permanentmagnetische Kern im Laufe des Verfahrens vollständig von der Ummantelung getrennt wird, kann durch die vorgängige Entmagnetisierung in besserem Masse gewährleistet werden, dass sich Verunreinigungen an dem permanentmagnetischen Kern anlagern.

Mit dem Begriff "Entmagnetisieren" ist im Rahmen der vorliegenden Anmeldung gemeint, dass das magnetische Moment (Dipolmoment) des permanentmagnetischen Kerns auf einen Wert reduziert wird, welcher höchstens 10% des magnetischen Moments beträgt, das der permanentmagnetische Kern bei vollständiger Magnetisierung aufweist.

Ferner lassen sich verschiedene optionale Bearbeitungsschritte, wie beispielsweise mechanische Bearbeitung mit metallischen Werkzeugen oder das Umspritzen des permanentmagnetischen Kerns in einer Spritzgiessvorrichtung einfacher durchführen, wenn der permanentmagnetische Kern entmagnetisiert ist.

Vorzugsweise wird der permanentmagnetische Kern nach dem Anbringen der Umkapselung wieder magnetisiert. Das Magnetisieren kann unmittelbar nach dem Anbringen der Umkapselung durchgeführt werden oder auch nachdem die Flügel auf der Umkapselung angebracht sind.

Um den permanentmagnetischen Kern aus der Ummantelung herauszutrennen, sind mehrere Varianten möglich. Beispielsweise erfolgt das Trennen des permanentmagnetischen Kerns von der Ummantelung durch eine mechanische Bearbeitung.

Die mechanische Bearbeitung umfasst z.B. Schneiden oder Bohren oder Schleifen oder Fräsen.

Eine bevorzugte Variante ist es, dass das Trennen des permanentmagnetischen Kerns von der Ummantelung mittels einer mechanischen Pressvorrichtung erfolgt. Dazu ist es möglich, den permanentmagnetischen Kern mittels der Pressvorrichtung durch die Ummantelung hindurch zu pressen und ihn dadurch aus der Ummantelung herauszudrücken.

Falls der permanentmagnetische Kern ringförmig ausgestaltet ist, ist es bevorzugt, dass zum Trennen des permanentmagnetischen Kerns von der Ummantelung eine zentrale Bohrung gemacht wird, welche sich in einer axialen Richtung vollständig durch die Ummantelung erstreckt. Die Ummantelung wird also in axialer Richtung und vorzugsweise im zentralen Bereich der Ummantelung vollständig durchbohrt, sodass eine zylindrische Öffnung im Zentrum der Ummantelung entsteht. Anschliessend ist die Ummantelung ringförmig ausgestaltet.

Eine weitere Variante besteht darin, dass der Ummantelung Wärme zugeführt wird, um den permanentmagnetischen Kern von der Ummantelung zu trennen. So kann beispielsweise der Kunststoff, aus welchem die Ummantelung besteht, angeschmolzen oder aufgeschmolzen werden, um den permanentmagnetischen Kern von der Ummantelung zu trennen. Insbesondere ist es auch möglich, einen solchen thermischen Prozess mit einer mechanischen Bearbeitung zu kombinieren, um den permanentmagnetischen Kern von der Ummantelung zu trennen. Die Ummantelung kann beispielsweise durch Wärmezufuhr aufgeweicht werden, um dann den permanentmagnetischen Kern, beispielsweise mit einer Pressvorrichtung aus der Ummantelung herauszudrücken.

Gemäss einer bevorzugten Verfahrensführung wird die Umkapselung durch Umspritzen des permanentmagnetischen Kerns mit einem Kunststoff hergestellt. Dies kann beispielsweise in einem Spritzgiessprozess in einer Spritzgiessvorrichtung erfolgen.

Eine weitere bevorzugte Verfahrensführung besteht darin, dass die Umkapselung und die Flügel in einem einzigen Spritzgiessprozess gefertigt werden. Das bedeutet, dass in einem einzigen Spritzgiessprozess die Umkapselung und alle Flügel gemeinsam hergestellt werden. Natürlich ist es optional möglich, dass die endgültige Form der Flügel und/oder der Umkapselung nach diesem Spritzgiessprozess durch eine mechanische Nachbearbeitung, beispielsweise durch eine spanabhebende Bearbeitung erzeugt wird.

Gemäss einer anderen bevorzugten Verfahrensführung wird die Umkapselung durch Fügen mehrerer Komponenten hergestellt.

Dazu ist es beispielsweise möglich, dass die Umkapselung einen Becher und einen Deckel umfasst, wobei der permanentmagnetische Kern in den Becher eingelegt wird, und wobei der Deckel mit dem Becher verschweisst wird. Somit wird die Umkapselung aus zwei Kunststoffteilen hergestellt, nämlich aus dem Becher, in welchen der permanentmagnetische Kern eingelegt wird, und aus dem Deckel, mit welchem der Becher verschlossen wird. Das Verschweissen des Bechers mit dem Deckel kann beispielsweise mittels Spiegel-, Ultraschall- oder Infrarotschweissens erfolgen. Natürlich sind auch andere Fügeverfahren möglich, um den Deckel mit dem Becher zu verbinden, beispielsweise Kleben oder Verschrauben.

Eine weitere bevorzugte Verfahrensführung besteht darin, dass die Umkapselung mittels eines Sinterprozesses hergestellt wird. Die Umkapselung wird dann aus einem Pulver oder aus einem Granulat hergestellt, das unter Anwendung von Druck und optional eine Temperaturbehandlung auf den permanentmagnetischen Kern gepresst wird, derart, dass der permanentmagnetische Kern vollständig umschlossen wird.

Die Mehrzahl von Flügeln wird beispielsweise durch Schweissen auf der Umkapselung befestigt. Dabei ist es möglich, dass jeder Flügel einzeln auf der Umkapselung befestigt wird, beispielsweise durch Schweissen oder Kleben, oder, dass zunächst eine Grundplatte mit den darauf angeordneten und fixierten Flügeln hergestellt wird, und diese Grundplatte dann auf der Umkapselung fixiert wird.

Insbesondere für Anwendungen in der biotechnologischen oder der pharmazeutischen Industrie ist es bevorzugt, dass die Umkapselung und die Flügel aus einem biokompatiblen Kunststoff bestehen.

Beispielsweise können die Umkapselung und die Flügel aus Polyethylen (PE) oder Polypropylen (PP) bestehen.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine schematische Darstellung eines Bioreaktors, der aus dem Stand der Technik bekannt ist,
- Fig. 2:: eine perspektivische Darstellung eines Ausführungsbeispiels eines Flügelrads, das mit einem erfindungsgemässen Verfahren hergestellt ist,
- Fig. 3:: eine Schnittdarstellung des Ausführungsbeispiels aus Fig. 2 in einem Schnitt entlang der axialen Richtung,
- Fig. 4:: eine perspektivische Darstellung einer Variante für die Ausgestaltung des permanentmagnetischen Kerns,
- Fig. 5:: eine schematische Schnittdarstellung eines Laufrads, welches für ein erfindungsgemässes Verfahren verwendet werden kann,
- Fig. 6:: das Laufrad aus Fig. 5 nach Entfernen aller Schaufeln, und
- Fig. 7:: eine Variante für die Ausgestaltung des permanentmagnetischen Kerns des Laufrads.

Wie bereits vorangehend erläutert, zeigt Fig. 1 eine schematische Darstellung eines Bioreaktors 100', der aus dem Stand der Technik bekannt ist. Der Bioreaktor 100' umfasst eine Mischvorrichtung mit einem berührungslos magnetisch gelagerten und berührungslos magnetisch angetriebenen Flügelrad 1' zum Durchmischen von mindestens zwei Substanzen.

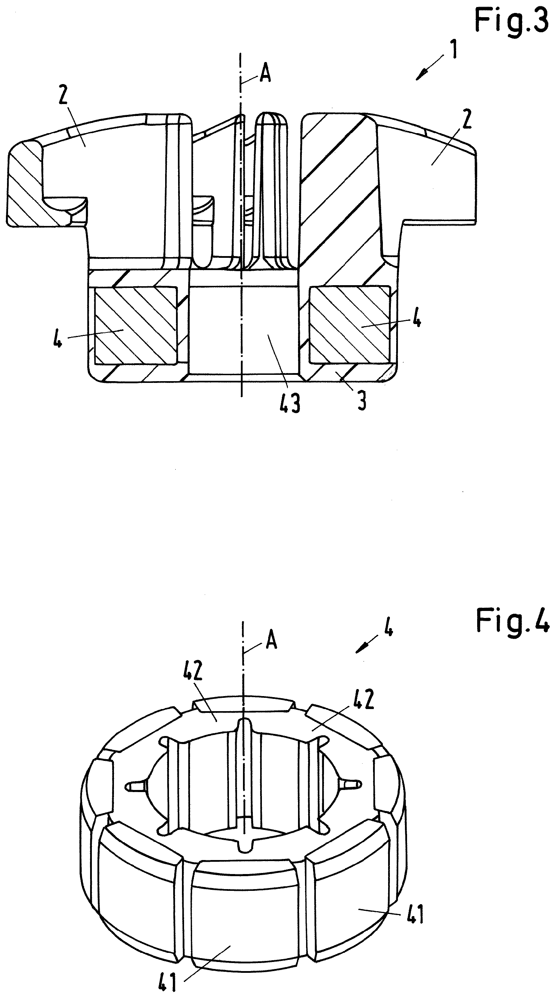

Fig. 2 zeigt in einer perspektivischen Darstellung ein Ausführungsbeispiels eines Flügelrads, das mit einem erfindungsgemässen Verfahren hergestellt ist. Das Flügelrad ist gesamthaft mit dem Bezugszeichen 1 bezeichnet. Das Flügelrad 1 ist für eine Rotation um eine axiale Richtung A ausgestaltet. Zum besseren Verständnis zeigt Fig. 3 das Flügelrad 1 aus Fig. 2 in einer Schnittdarstellung, wobei der Schnitt entlang der axialen Richtung A erfolgt.

Das Flügelrad 1 ist für eine Pumpvorrichtung zum Fördern eines Fluids oder für eine Mischvorrichtung zum Mischen von mindestens zwei fliessfähigen Substanzen ausgestaltet. Insbesondere kann das Flügelrad 1 für einen solchen Bioreaktor 100' mit einer Mischvorrichtung ausgestaltet sein, wie er in Fig. 1 dargestellt ist. Der Begriff "fliessfähige Substanzen" umfasst neben Fluiden insbesondere auch pulverförmiger Substanzen. Die Mischvorrichtung kann also insbesondere auch für das Mischen von einem Pulver und einer Flüssigkeit verwendet werden, z. B., um das Pulver in der Flüssigkeit aufzulösen.

Insbesondere ist das Flügelrad 1 für eine vorzugsweise berührungslose magnetische Lagerung sowie für einen berührungslosen Antrieb zu Rotation um die axiale Richtung A ausgestaltet. Das Flügelrad 1 ist beispielsweise in den Stator 130' (Fig. 1) einsetzbar, der als Lager- und Antriebsstator ausgestaltet. Das Flügelrad 1 bildet dann mit dem Stator 130' einen elektromagnetischen Drehantrieb, wobei das Flügelrad 1 im Betriebszustand berührungslos magnetisch zur Rotation um die axiale Richtung A antreibbar und bezüglich des Stators 130' berührungslos magnetisch lagerbar ist.

Das in Fig. 2 und Fig. 3 dargestellte Flügelrad 1 ist für einen elektromagnetischen Drehantrieb ausgestaltet, welcher als Innenläufer konfiguriert ist, das heisst der Stator 130' ist um das Flügelrad herum angeordnet. Natürlich ist es auch möglich, dass das Flügelrad 1 für einen elektromagnetischen Drehantrieb ausgestaltet ist, welcher als Aussenläufer konfiguriert ist, das heisst, der Stator ist radial innenliegen im Flügelrad 1 angeordnet, sodass sich das Flügelrad 1 in Umfangsrichtung um den Stator herum erstreckt. Eine solche Konfiguration als Aussenläufer ist beispielsweise in Fig. 2 der EP 3 115 103 A1 gezeigt.

Das Flügelrad 1 umfasst einen permanentmagnetischen Kern 4 und eine Umkapselung 3, welche aus einem Kunststoff besteht und welche den permanentmagnetischen Kern 4 vollständig umschliesst. Durch die Umkapselung 3 ist somit gewährleistet, dass der permanentmagnetische Kern 4 im Betriebszustand nicht mit dem geförderten Fluid oder den zu mischenden Substanzen in Kontakt kommt.

Auf der Umkapselung 3 ist eine Mehrzahl von Flügeln 2 angeordnet, die auf der Umkapselung 3 fixiert sind. Bei dem in Fig. 2 und Fig. 3 dargestellten Ausführungsbeispiel sind mit beispielhaftem Charakter genau fünf Flügel 2 vorgesehen. Es versteht sich, dass in anderen Ausgestaltungen des Flügelrads 1 mehr als fünf oder weniger als fünf Flügel 4 vorgesehen sein können. Auch ist die Ausgestaltung der einzelnen Flügel 2 wie sie insbesondere in Fig. 2 gut zu erkennen ist, rein beispielhaften Charakter hat. Es gibt eine grosse Vielzahl von Möglichkeiten für die Ausgestaltung der einzelnen Flügel 4.

Die Flügel 2 bestehen vorzugsweise aus Kunststoff und können beispielsweise einstückig mit der Umkapselung 3 ausgestaltet sein. Natürlich ist es auch möglich, die individuellen Flügel 2 oder die Gesamtheit der Flügel 2 in einem separaten Fertigungsprozess herzustellen und sie dann mit der Umkapselung 3 des permanentmagnetischen Kerns 4 zu verbinden, beispielsweise mittels eines Schweissprozesses.

Der permanentmagnetische Kern 4 ist bei dem hier beschriebenen Ausführungsbeispiel des Flügelrads 1 als permanentmagnetischer Ring ausgestaltet mit einer zentralen Öffnung 43. In anderen Ausgestaltungen ist der permanentmagnetische Kern als eine permanentmagnetische Scheibe ausgestaltet.

Mit dem "permanentmagnetisch Kern" 4 des Flügelrads 1 ist derjenige Bereich des Flügelrads 1 gemeint, welcher für die Erzeugung der magnetischen Lagerkräfte und für die Drehmomentbildung magnetisch mit dem Stator 130' zusammenwirkt.

Der permanentmagnetische Kern 4 umfasst mindestens einen Permanentmagneten. Es sind auch Ausgestaltungen möglich, bei denen der permanentmagnetische Kern 4 mehrere Permanentmagnete 41 umfasst (siehe z. B. Fig. 4). Bei dem in Fig. 2 und Fig. 3 dargestellten Ausführungsbeispiel des Flügelrads 1 besteht der permanentmagnetische Kern 4 vollständig aus einem permanentmagnetischen Material, sodass der permanentmagnetische Kern 4 der Permanentmagnet ist. Der permanentmagnetische Kern 4 ist beispielsweise in radialer Richtung magnetisiert.

Als Permanentmagnete bezeichnet man üblicherweise solche ferromagnetischen oder ferrimagnetischen Werkstoffe, die hartmagnetisch sind, also eine hohe Koerzitivfeldstärke aufweisen. Die Koerzitivfeldstärke ist diejenige magnetische Feldstärke, die man benötigt, um einen Stoff zu entmagnetisieren. Im Rahmen dieser Anmeldung wird unter einem Permanentmagneten ein Werkstoff bzw. ein Material verstanden, der eine Koerzitivfeldstärke, genauer gesagt eine Koerzitivfeldstärke der magnetischen Polarisation aufweist, die mehr als 10'000 A/m beträgt.

Es sind auch solche Ausgestaltungen möglich, bei denen der permanentmagnetische Kern 4 des Flügelrads 1 sowohl weichmagnetische Materialien als auch permanentmagnetische Materialien umfasst. Fig. 4 zeigt eine perspektivische Darstellung einer solchen Variante für die Ausgestaltung des permanentmagnetischen Kerns 4.

Der permanentmagnetische Kern 4 umfasst einen Grundkörper 42, an welchem oder in welchem eine Mehrzahl von Permanentmagneten 41 angeordnet sind. Der Grundkörper 42, der bei der in Fig. 4 dargestellten Variante ringförmig ausgestaltet ist, besteht aus einem weichmagnetischen Material, vorzugsweise einem ferromagnetischen oder einem ferrimagnetischen. Als weichmagnetisch Materialien sind insbesondere Eisen, Nickel-Eisen, Kobalt-Eisen, Silizium-Eisen oder Mu-Metall geeignet. Der permanentmagnetische Kern 4 umfasst ferner eine Mehrzahl von Permanentmagneten 41, hier mit beispielhaftem Charakter acht Permanentmagnete 41. Jeder Permanentmagnet 41 ist segmentförmig ausgestaltet. Die Permanentmagnete 41 sind radial aussenliegend entlang der Umfangsfläche an dem Grundkörper 42 angeordnet und an dem Grundkörper 42 befestigt, beispielsweise mittels einer Klebeverbindung. Der Grundkörper 42 dient als ringförmiger Rückschluss zur Führung des magnetischen Flusses zwischen den Permanentmagneten 41.

Es sind auch solche Ausgestaltungen des permanentmagnetischen Kerns möglich, bei welchen der Grundkörper 42 radial aussenliegend angeordnet ist und die Permanentmagnet 41 in Umfangsrichtung umgibt. Auch ist es möglich, dass der Grundkörper 42 Ausnehmungen aufweist, in welche die Permanentmagnete 41 eingelegt oder eingesetzt werden.

Solche Ausgestaltungen, bei welchen der permanentmagnetische Kern 4 nicht vollständig aus einem permanentmagnetischen Material besteht, sondern beispielsweise aus dem ferromagnetische Grundkörper 42 und den Permanentmagneten 41 sind z.B. vorteilhaft, wenn man bei grossen Flügelrädern 1 die Kosten durch Einsparen von permanentmagnetischem Material reduzieren will.

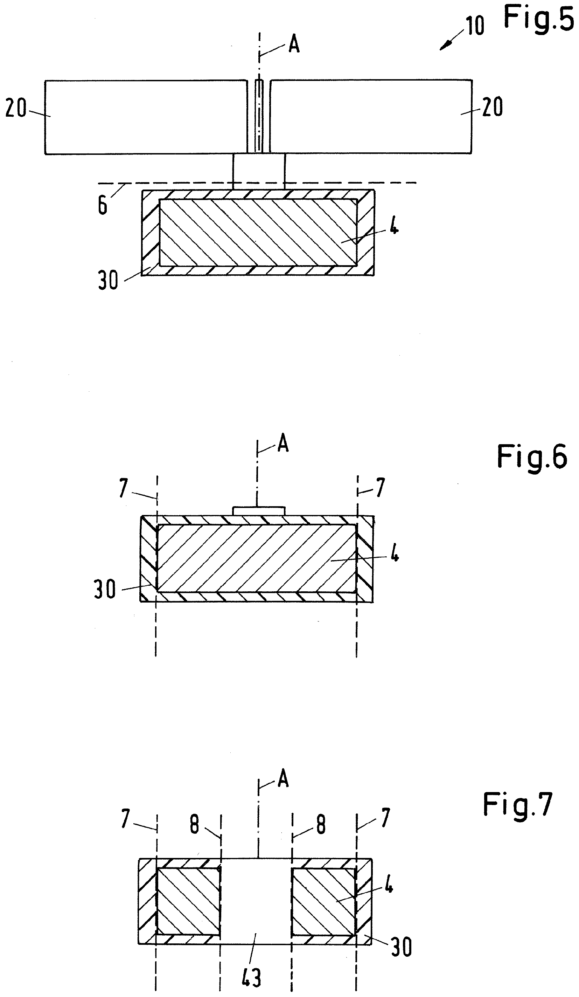

Im Folgenden wird ein Ausführungsbeispiel eines erfindungsgemässen Verfahrens zur Herstellung eines Flügelrads, beispielsweise des in Fig. 2 und Fig. 3 dargestellten Flügelrads 1, anhand der Fig. 5 - Fig. 7 näher erläutert.

Zunächst wird in einem ersten Verfahrensschritt ein magnetisch lagerbares Laufrad 10 bereitgestellt, welches einen permanentmagnetischen Kern 4 aufweist, der von einer Ummantelung 30 vollständig umschlossen wird, wobei die Ummantelung 30 aus einem Kunststoff besteht. Auf der Ummantelung 30 ist eine Mehrzahl von Schaufeln 20 zur Wechselwirkung mit einem Fluid oder mehreren Substanzen vorgesehen. Das Laufrad 10 ist beispielsweise das Laufrad 10 einer Pumpvorrichtung zum Fördern eines Fluids oder das Laufrad 10 einer Mischvorrichtung zum Mischen von mindestens zwei fliessfähigen Substanzen.

Das Laufrad 10 kann insbesondere auch ein Flügelrad 1' (Fig. 1) sein oder ein Flügelrad 1, wie es anhand der Fig. 2 und Fig. 3 beschrieben ist. Insbesondere wenn das Laufrad 10 für den Einmalgebrauch ausgestaltet ist, so ist das Laufrad 10 vorzugsweise ein Einmalteil, beispielsweise ein Flügelrad 1, 1', das bereits für eine Anwendung benutzt wurde und nun durch ein neues, das heisst unbenutztes, ersetzt werden muss.

Das Laufrad 10 ist also vorzugsweise, aber nicht notwendigerweise, ein solches Laufrad, das für den Einmalgebrauch ausgestaltet worden ist und bereits einmal benutzt worden ist. Anstelle das komplette Laufrad 10 zu entsorgen, wird nun vorgeschlagen, den permanentmagnetischen Kern 4 vom Rest des Laufrads 10 zu trennen, und den magnetisch wirksamen Kern 4 dann für die Herstellung eines neuen Flügelrads 1 zu verwenden, insbesondere eines solchen Flügelrads 1, das für den Einmalgebrauch ausgestaltet ist.

Fig. 5 zeigt in einer schematischen Schnittdarstellung das Laufrad 10, welches für das hier beschriebene Ausführungsbeispiel verwendet wird. Nachdem das Laufrad 10 bereitgestellt ist, werden in einem nächsten Verfahrensschritt alle Schaufeln 20 von der Ummantelung 30 entfernt. Dies kann beispielsweise erfolgen, indem die Schaufel 20 mechanisch entfernt werden, z.B. durch Schneiden entlang der gestrichelten Linie 6 in Fig. 5. Fig. 6 zeigt das Laufrad 10 aus Fig. 5 nach Entfernen aller Schaufeln 20.

In einem nächsten Verfahrensschritt wird nun der permanentmagnetische Kern 4 von der Ummantelung 30 getrennt. In Fig. 5 und Fig. 6 ist der permanentmagnetische Kern 4 als eine Scheibe ausgestaltet. Fig. 7 zeigt in einer zu Fig. 6 analogen Darstellung eine Ausgestaltung des magnetisch wirksamen Kerns 4 als ein Ring also mit der zentralen Öffnung 43.

Besonders bevorzugt wird der permanentmagnetische Kern 4 vor dem Trennen von der Ummantelung entmagnetisiert. Besonders bevorzugt erfolgt die Entmagnetisierung bereits vor dem Entfernen der Schaufeln 20 von der Ummantelung 30. Die Entmagnetisierung des permanentmagnetischen Kerns 4 hat den Vorteil, dass die weitere Bearbeitung, beispielsweise die Bearbeitung mit metallischen Werkzeugen und Maschinen deutlich einfacher ist, wenn der permanentmagnetische Kern 4 entmagnetisiert ist. Zudem lässt sich auch die Gefahr vermeiden, dass während der Bearbeitung Verschmutzungen durch den permanentmagnetischen Kern 4 angesogen werden und sich anlagern.

Die Entmagnetisierung des permanentmagnetischen Kerns 4 erfolgt vorzugsweise mittels elektromagnetischer Wechselfelder. Der Prozess der Entmagnetisierung kann dabei in mehreren Schritten erfolgen. Die Entmagnetisierung erfolgt vorzugsweise so lange, bis die Remanenz des permanentmagnetischen Kerns verschwindet oder zumindest näherungsweise gleich null ist. Wie bereits erwähnt, ist mit dem Begriff "Entmagnetisierung" eine Reduzierung des magnetischen Moments des permanentmagnetischen Kerns 4 auf einen Wert gemeint, welcher höchstens 10% des magnetischen Moments beträgt, das der permanentmagnetische Kern 4 bei vollständiger Magnetisierung aufweist.

Nachdem die Schaufeln 20 entfernt sind und optional der permanentmagnetische Kern 4 entmagnetisiert ist, erfolgt nun das Heraustrennen des permanentmagnetischen Kerns 4 aus der Ummantelung 30. Hierfür gibt es zahlreiche Möglichkeiten, von denen im Folgenden einige genannt werden.

Insbesondere sind mechanische Bearbeitungsverfahren geeignet. So kann der permanentmagnetische Kern 4 beispielsweise mittels einer mechanischen Pressvorrichtung aus der Ummantelung 30 herausgepresst werden. Dazu wird beispielsweise die Ummantelung 30 mit dem darin angeordneten Kern 4 derart in eine mechanische Pressvorrichtung eingelegt, dass die Pressvorrichtung eine in axialer Richtung A wirkende Kraft insbesondere auf den Bereich ausübt, in welchem der permanentmagnetische Kern 4 angeordnet ist. Dieser Bereich ist in Fig. 6 durch die beiden gestrichelten Linien mit dem Bezugszeichen 7 angedeutet. Der permanentmagnetische Kern 4 wird dann mittels der Pressvorrichtung entlang der Linien 7 in axialer Richtung A durch die Ummantelung 30 hindurch gedrückt und kann auf diese Weise von der Ummantelung 30 getrennt werden.

Alternativ oder ergänzend ist es auch möglich, den permanentmagnetischen Kern 4 mittels eines zerspanenden oder spanabhebenden Prozesses von der Ummantelung 30 zu trennen. Solche mechanischen Prozesse umfassen beispielsweise Schneiden, Bohren, Sägen, Fräsen, Drehen oder Schleifen. Beispielsweise kann die Ummantelung entlang der Linien 7 aufgeschnitten werden oder bis auf die Linien 7 abgeschliffen oder weggefräst werden.

Falls der permanentmagnetische Kern 4 ringförmig ausgestaltet ist und somit die zentrale Öffnung 43 aufweist, erfolgt das Trennen des permanentmagnetischen Kerns 4 vorzugsweise in zwei separaten Schritten. Zunächst wird eine zentrale Bohrung entlang der gestrichelt dargestellten Linien 8 in Fig. 7 durchgeführt, um die Ummantelung 30 aus der zentralen Öffnung 43 des permanentmagnetischen Kerns 4 zu entfernen. Diese Bohrung kann mit einem Schleifen oder Fräsen kombiniert werden. Nachdem die Ummantelung 30 aus der zentralen Öffnung 43 entfernt ist - so wie es in Fig. 7 dargestellt ist - erfolgt die weitere Trennung des permanentmagnetischen Kerns 4 von der Ummantelung 30 wie vorangehend beschrieben, also beispielsweise mittels der mechanischen Pressvorrichtung, mit welcher der permanentmagnetische Kern 4 aus der Ummantelung 30 herausgedrückt wird.

Alternativ zu oder in Kombination mit der mechanischen Bearbeitung zum Trennen des permanentmagnetischen Kerns 4 von der Ummantelung 30 ist auch eine thermische Bearbeitung möglich, um den permanentmagnetischen Kern 4 von der Ummantelung 30 zu trennen.

Beispielsweise kann die aus einem Kunststoff bestehende Ummantelung 30 durch Zufuhr von Wärme aufgeschmolzen werden, sodass der permanentmagnetische Kern 4 aus der Ummantelung 30 herausgenommen werden kann. Es ist aber auch möglich, die thermische Bearbeitung mit einer mechanischen Bearbeitung zu kombinieren. Beispielsweise kann die Ummantelung 30 durch Wärmezufuhr aufgeweicht oder plastifiziert werden und dann der permanentmagnetische Kern 4 mit einer mechanischen Pressvorrichtung aus der Ummantelung 30 heraus gedrückt werden.

Nachdem der permanentmagnetische Kern vollständig von der Ummantelung 30 getrennt ist, und optional gereinigt ist, dient er als Ausgangskomponente für die Herstellung eines neuen Flügelrads 1. Die Fertigstellung des Flügelrads 1 kann dann beispielsweise in sinngemäss gleicher Weise erfolgen, wie dies mit einem neuen, das heisst vorher noch nicht verwendeten, permanentmagnetischen Kern 4 erfolgt.

Der permanentmagnetische Kern 4 wird mit der Umkapselung 3 (Fig. 2, Fig. 3) aus einem Kunststoff versehen, welche den permanentmagnetischen Kern 4 vollständig und vorzugsweise hermetisch dicht umschliesst. Anschliessend wird die Mehrzahl von Flügeln 2 auf der Umkapselung 3 angebracht und fixiert.

Für die Herstellung der Umkapselung 3 sind mehrere Prozesse möglich. Beispielsweise kann der permanentmagnetische Kern 4 mit einem Kunststoff umspritzt werden. Dies kann insbesondere in einem Spritzgiessprozess in einer Spritzgiessvorrichtung erfolgen.

Besonders bevorzugt werden die Umkapselung 3 und alle Flügel 2 in einem einzigen Spritzgiessprozess gefertigt. Das bedeutet, dass in einem einzigen Spritzgiessprozess die Umkapselung 3 und alle Flügel 2 gemeinsam hergestellt werden. Natürlich ist es optional möglich, dass die endgültige Form der Flügel 2 und/oder der Umkapselung 3 nach diesem Spritzgiessprozess durch eine mechanische Nachbearbeitung, beispielsweise durch eine spanabhebende Bearbeitung, erzeugt wird.

Ferner ist es möglich, die Umkapselung 3 durch das Fügen mehrerer Komponenten herzustellen. So kann die Umkapselung 3 beispielsweise einen formstabilen Becher und einen formstabilen Deckel umfassen, der zum Verschliessen des Bechers ausgestaltet ist. Der permanentmagnetische Kern 4 wird dann in den Becher eingelegt, der Deckel auf den Becher aufgesetzt und dann durch einen Fügeprozess fest mit dem Becher verbunden. Der Fügeprozess ist beispielsweise ein Schweissprozess wie Infrarotschweissen. Das Fügen kann aber auch mit anderen Verfahren erfolgen, beispielsweise mittels Klebens oder mittels Verschraubens.

Eine weitere Möglichkeit ist es, die Umkapselung 3 mit einem Sinterprozess herzustellen. Die Umkapselung wird dann aus einem Pulver oder aus einem Granulat hergestellt, das unter Anwendung von Druck und optional eine Temperaturbehandlung auf den permanentmagnetischen Kern 4 gepresst wird, derart, dass der permanentmagnetische Kern 4 vollständig umschlossen wird. Diese Möglichkeit eignet sich insbesondere auch, wenn der Kunststoff aus dem die Umkapselung 3 besteht, nicht mit einem Spritzgiessverfahren verarbeitet werden kann, wie dies beispielsweise für Polytetrafluorethylen (PTFE) der Fall ist.

Nachdem die Umkapselung fertiggestellt ist, werden die Flügel 2 auf der Umkapselung 3 fixiert, beispielsweise durch Schweissen.

Insbesondere für Anwendungen in der pharmazeutischen Industrie oder in der biotechnologischen Industrie, beispielsweise für Anwendungen in einem Bioreaktor, sind für die Umkapselung 3 und/oder für die Flügel 2 biokompatible Kunststoffe bevorzugt, insbesondere Polyethylen (PE) oder Polypropylen (PP).

Natürlich sind auch andere Kunststoffe geeignet, wie beispielsweise PolyVinylChlorid (PVC), Low Density PolyEthylene (LDPE), Ultra Low Density PolyEthylene (ULDPE), High Density PolyEthylene (HDPE), Ethylene Vinyl Acetate (EVA), PolyEthylene Terephthalate (PET), PolyVinyliDene Fluoride (PVDF), Acrylonitrile Butadiene Styrene (ABS), PolyAcryl, PolyCarbonate (PC), Polysulfone wie beispielsweise Polysulfon (PSU).

Falls der permanentmagnetische Kern vor dem Trennen von der Ummantelung 30 entmagnetisiert wurde, so wird, nachdem die Umkapselung 3 fertiggestellt ist, der permanentmagnetische Kern 4 wieder magnetisiert. Die Magnetisierung des permanentmagnetischen Kerns 4 kann vor oder nach dem Anbringen der Flügel 103 erfolgen.

Das erfindungsgemässe Verfahren eignet sich insbesondere, aber nicht nur, für solche Flügelräder 1, die für den Einmalgebrauch ausgestaltet sind. Nachdem das Flügelrad 1 gebraucht worden ist, kann der permanentmagnetische Kern 4 herausgetrennt und für die Herstellung eines neuen Flügelrads 1 wiederverwendet werden, wobei dieses neue Flügelrad 1 dann auch wieder für den Einmalgebrauch

## Patentansprüche

1. Verfahren zur Herstellung eines Flügelrads für eine Misch- oder Pumpvorrichtung mit magnetisch gelagertem Flügelrad mit den folgenden Schritten:
Bereitstellen eines magnetisch lagerbaren Laufrads (10), welches einen permanentmagnetischen Kern (4) aufweist, der von einer Ummantelung (30) vollständig umschlossen wird, wobei die Ummantelung (30) aus einem Kunststoff besteht, und wobei auf der Ummantelung (30) eine Mehrzahl von Schaufeln (20) zum Mischen oder Fördern von Substanzen vorgesehen ist;
Entfernen aller Schaufeln (20) von der Ummantelung (30);
Trennen des permanentmagnetischen Kerns (4) von der Ummantelung (30), wobei vor dem Trennen des permanentmagnetischen Kerns (4) von der Ummantelung (30) der permanentmagnetische Kern (4) entmagnetisiert wird; Anbringen einer Umkapselung (3), welche aus einem Kunststoff besteht, und welche den permanentmagnetischen Kern (4) vollständig umschliesst; Anbringen einer Mehrzahl von Flügeln (2) auf der Umkapselung (3).

2. Verfahren nach Anspruch 1, wobei der permanentmagnetische Kern (4) nach dem Anbringen der Umkapselung (3) magnetisiert wird.

3. Verfahren nach einem der vorangehenden Ansprüche, wobei das Trennen des permanentmagnetischen Kerns (4) von der Ummantelung (30) durch eine mechanische Bearbeitung erfolgt.

4. Verfahren nach Anspruch 3, wobei die mechanische Bearbeitung Schneiden oder Bohren oder Schleifen oder Fräsen umfasst.

5. Verfahren nach einem der vorangehenden Ansprüche, wobei das Trennen des permanentmagnetischen Kerns (4) von der Ummantelung (30) mittels einer mechanischen Pressvorrichtung erfolgt.

6. Verfahren nach einem der vorangehenden Ansprüche, wobei zum Trennen des permanentmagnetischen Kerns (4) von der Ummantelung eine zentrale Bohrung gemacht wird, welche sich in einer axialen Richtung (A) vollständig durch die Ummantelung (30) erstreckt.

7. Verfahren nach einem der vorangehenden Ansprüche, wobei der Ummantelung (30) Wärme zugeführt wird, um den permanentmagnetischen Kern (4) von der Ummantelung (30) zu trennen.

8. Verfahren nach einem der vorangehenden Ansprüche, wobei die Umkapselung (3) durch Umspritzen des permanentmagnetischen Kerns (4) mit einem Kunststoff hergestellt wird.

9. Verfahren nach einem der vorangehenden Ansprüche, wobei die Umkapselung (3) und die Flügel (2) in einem einzigen Spritzgiessprozess gefertigt werden.

10. Verfahren nach einem der Ansprüche 1-7, wobei die Umkapselung (3) durch Fügen mehrerer Komponenten hergestellt wird.

11. Verfahren nach Anspruch 9, wobei die Umkapselung (3) einen Becher und einen Deckel umfasst, wobei der permanentmagnetische Kern (4) in den Becher eingelegt wird, und wobei der Deckel mit dem Becher verschweisst wird.

12. Verfahren nach einem der Ansprüche 1-7, wobei die Umkapselung (3) mittels eines Sinterprozesses hergestellt wird.

13. Verfahren nach einem der vorangehenden Ansprüche, wobei die Umkapselung (3) und die Flügel (2) aus einem biokompatiblen Kunststoff bestehen.

14. Verfahren nach einem der vorangehenden Ansprüche, wobei die Umkapselung (3) und die Flügel (2) aus Polyethylen oder Polypropylen bestehen.
